# EUROPÄISCHE PATENTSCHRIFT

(11) **EP 0 443 111 B1**
(45) Veröffentlichungstag und Bekanntmachung des Hinweises auf die Patenterteilung: **02.03.1994**
(21) Anmeldenummer: 90122486.5
(22) Anmeldetag: 26.11.1990
(51) Int. Cl.: F16B 7/04, F16B 12/40, A47B 13/06

(54) **Verbindungselement zum Verbinden einer Säule mit einer rohrförmigen Strebe, zu verbindende Säule und Gestell mit wenigstens einer Säule und einer Strebe**
Fastener to attach a column to a tubular bar, attached column and assembly with at least a column and a bar
Connecteur pour la connexion d'une colonne avec une barre tubulaire, colonne connectée et ensemble avec au moins une colonne et une barre

(30) Priorität: 31.01.1990 CH 314/90
(43) Veröffentlichungstag der Anmeldung: 28.08.1991
(73) Patentinhaber: USM U. SCHAERER SOEHNE AG, CH-3110 Münsingen (CH)
(72) Erfinder: Graf, Rudolf, CH-3110 Münsingen (CH)
(74) Vertreter: Keller, René, Dr.

(56) Entgegenhaltungen:
- EP-A- 0 157 993
- DE-A- 2 108 342
- DE-A- 3 602 686
- FR-A- 2 602 838
- GB-A- 2 125 511
- US-A- 4 574 552

## Beschreibung

Die Erfindung betrifft eine Verbindungsanordnung einer rohrförmigen Strebe an einer Säule gemäß dem Oberbegriff des Patentanspruchs 1, ein Verbindungselement der Verbindungsanordnung gemäß dem Oberbegriff des Patentanspruchs 2, eine Säule der Verbindungsanordnung gemäß dem Oberbegriff des Patentanspruchs 9 und ein Gestell gemäß dem Oberbegriff des Patentanspruchs 10.

Aus der der FR-A 2 602 838 ist eine Verbindungsanordnung eines Strebenendes mit einer Säulen an deren Säulenmantel bekannt. Um den Säulenmantel sind zwei zusammenwirkende Halbringe mit einem oberen und unteren Steg festgespannt. An die Strebenenden ist eine Halteplatte angeschweißt, an der jeweils zwei einen hakenförmigen Ansatz tragende Verbindungselemente festgeschraubt sind. Die Haken werden mit einer weiteren Schraube auf dem Steg festgezogen, wobei zwischen den Haken und dem Säulenmantel ein Zwischenraum verbleibt, d. h. die Haken liegen nur am Steg, jedoch nicht am Säulenmantel an.

Aus der DE-A 2 108 342 ist eine nicht gattungsgemäße Verbindungsanordnung eines im Querschnitt quadratischen hohlen Strebenendes an einer im Querschnitt quadratischen hohlen Säule bekannt. Die Säule weist am Befestigungsort einen Durchbruch in der Säulenwand auf, durch den zwei zueinander symmetrisch ausgebildete backentragende Verbindungselemente gesteckt sind. Die Backen sind am einen Ende jedes Verbindungslements angeordnet und weisen eine senkrecht zur Längsrichtung des Verbindungselements verlaufende Einkerbung auf. Die Einkerbung verläuft nur in dem Teil jedes Verbindungselments, der dem anderen Verbindungselement abgewandt ist, so daß bei aneinanderliegenden Verbindungselementen eine annähernd umlaufende Einkerbung vorhanden ist. Beide Ansätze stecken im hohlen Strebenende, wobei die Stirnseiten der Backen in das Säuleninnere hineinreichen, und werden mit einer Schraube derart gegeneinander verspannt, daß sie an die Innenwand der hohlen Strebe anliegen und die Einkerbung in den Randbereich des Durchbruchs gepreßt wird.

Eine weitere nicht gattungsgemäße Verbindungsanordnung zum Verbinden einer Säule mit einer Strebe ist aus der DE-OS 36 02 686 bekannt. Bei den bekannten Verbindungsanordnung greifen die Hakenenden von vier mit einer Schraube verstellbaren Hakenteilen in zwei Schlitze in einer als Vierkantrohr ausgebildeten Säule ein. Die Hakenteile sind mit einem Sicherungsbolzen in der Strebe befestigt und durch Verdrehen der Schraube um eine Schwenkachse schwenkbar. Die Hakenenden besitzen abgeschrägte Flächen. Durch Verdrehen der Schraube werden die Hakenenden gegen die gegenüberliegenden Lochränder der Schlitze auseinander gespreitzt, wobei die abgeschrägten Flächen die Stirnseite der Strebe gegen die Säule ziehen und damit die Strebe fest mit der Säule verbinden.

Ebenfalls eine nicht gattungsgemäße Verbindungsanordnung ist aus der GB-A 2 125 511 bekannt. Diese bekannte Verbindungsanordnung ist analog zu der aus der DE-OS 36 02 686 bekannten Verbindungsanordnung aufgebaut und besitzt u. a. anstelle der Schraube ein plattenförmiges Schließelement zum Auseinanderspreizen der Hakenenden. Anstelle von vier Hakenteilen werden nur zwei verwendet. Die Säule ist als Profilrohr ausgebildet.

Ferner ist eine weitere nicht gattungsgemäße Verbindungsanordnung aus der US-PS 4,574,552 bekannt. Die Säule ist hier jedoch als aufwendiges Profilrohr mit jeweils drei Stegen an jeder Säulenseite ausgebildet. Das Profilrohr hat in den Wandteilen zwischen den Stegen Schlitze zur Aufnahme der Hakenenden des Verbindungselements.

Die bekannten nicht gattungsgemäßen Verbindungsanordnungen benötigen Schlitze in der Säule, um die Hakenenden zur Befestigung einbringen zu können. Die Herstellung dieser Schlitze ohne Deformation der Säule ist jedoch aufwendig. In gleicher Höhe können zwar mehrere Streben an einer Säule befestigt werden, jedoch nur in einem Winkel von 90° zueinander.

Die bekannte gattungsgemäße Verbindungsanordnung weist eine Konstruktion mit vielen Einzelteilen auf, welche nur in aufwendiger Weise mit dem Strebenende befestigbar ist.

Der Erfindung liegt die Aufgabe zugrunde, eine einfache Verbindungsanordnung einer Säule mit einer rohrförmigen Strebe zu schaffen, das die obigen Nachteile vermeidet.

Die Lösung der Aufgabe ist hinsichtlich der Verbindungsanordnung Gegenstand des Patentanspruchs 1, hinsichtlich des Verbindungselements Gegenstand des Patentanspruchs 2, hinsichtlich der Säule Gegenstand des Patentanspruchs 9 und hinsichtlich des Gestells Gegenstand des Patentanspruchs 10.

In den Patentansprüchen 3 bis 8 sind bevorzugte Ausführungsarten des erfindungsgemäßen Verbindungselements beschrieben.

Im folgenden wird ein Ausführungsbeispiel des Erfindung anhand von Zeichnungen näher erläutert. Es zeigen:
- Fig. 1: ein Verbindungselement, welches eine vertikale Säule mit einer horizontalen Strebe verbindet,
- Fig. 2: eine Draufsicht auf eine der Backen des Verbindungselements,
- Fig. 3: eine perspektivische Darstellung der in Figur 2 dargestellten Backe,
- Fig. 4: eine perspektivische Darstellung der anderen Backe des Verbindungselements,
- Fig. 5: eine perspektivische Darstellung eines Gestells aufgebaut aus mehreren Säulen und Streben, wobei die Streben mit den Säulen durch Verbindungselemente verbunden sind, und
- Fig. 6: eine perspektivische Darstellung einer Säule mit zwei mit ihr verbunden Streben.

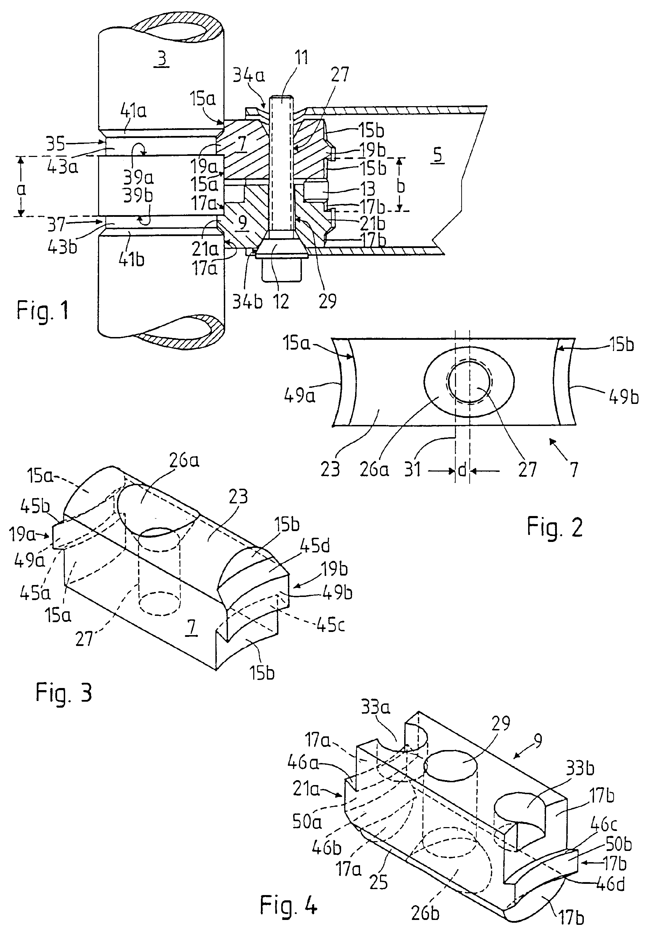

Das in **Figur 1** dargestellte Verbindungselement **1** zum Verbinden einer vertikalen zylindrischen, rohrförmigen Säule **3** mit einer rohrförmigen horizontalen hohlzylindrischen Strebe **5** hat zwei Backen **7** und **9**, eine Schraube **11** mit einem konischen Kopfansatz **12** und ein Distanzstück **13**. Die beiden Backen **7** und **9** stecken im linken Ende der Strebe **5** und werden mit der Schraube **11** einander diametral gegenüber in Strebenlängsrichtung gehalten. Jede der Backen **7** und **9** hat je zwei in einer Ebene liegende Stirnflächen **15a** und **15b** bzw. **17a** und **17b,** die durch je einen hakenartigen Ansatz **19a** bzw. **19b** sowie **21a** bzw. **21b** voneinander getrennt sind. Wie in der Draufsicht auf die Backe **7** in **Figur 2** zu sehen ist, ist die Form der Stirnflächen **15a** und **15b** dem Mantel der Säule **3** angepaßt; analog sind die Stirnflächen **17a** und **17b** der Backe **9** ausgebildet. Die Querschnitte der Ansätze **19a** und **19b** sind spiegelbildlich zu denjenigen der Ansätze **21a** und **21b** ausgebildet. Die der Innenfläche der Strebe **5** zugewandte Seite **23** bzw. **25** der Backe **7** bzw. **9** ist, wie insbesondere in deren perspektivischer Darstellung in den **Figuren** **3** und **4** zu sehen ist, gewölbt ausgebildet und damit an die Innenfläche der Strebe **5** angepaßt. Ausgehend von der Wölbungsmitte der Seiten **23** und **25** verläuft in der Mitte zu den Seitenwänden jeder Backe **7** bzw. **9** eine zu einem Trichter **26a** bzw. **26b** erweiterte Durchgangsbohrung **27** bzw. **29** in der Längssymmetrieebene durch jede der Backen **7** und **9**. Die Durchgangsbohrungen **27** und **29** befinden sich nicht in der Mitte **31** zur Backenlänge, sondern sind zu dieser um eine Distanz **d** versetzt angeordnet; siehe **Figur 2**. In ihrer Gebrauchslage fluchten die Durchgangsbohrungen **27** und **29** miteinander. Die Durchgangsbohrung **27** ist in ihrem nicht erweiterten Teil mit einem Gewinde versehen. Der Durchmesser der Durchgangsbohrung **29** entspricht dem Gewindeaußendurchmesser der Gewindebohrung **27** plus eine Toleranz.

Die Backe **9** ist spiegelbildlich zur Backe **7** ausgebildet, besitzt aber zusätzlich zwei Aussparungen **33a** und **33b,** in welche das Distanzstück **13** wahlweise unverlierbar mit einer schwachen "Klemmpassung" steckbar ist; in **Figur 1** sitzt das Distanzstück **13** in der Aussparung **33b**.

Die Strebe **5** hat an jedem Ende zurückversetzt zwei angesenkte, einander gegenüberliegende, miteinander fluchtende Löcher **34a** und **34b**, wobei nur die Löcher **34a** und **34b** am linken Ende der Strebe **5** dargestellt sind (**Figur 1**). Der Abstand der Löcher **34a** und **34b** vom Strebenende ist derart gewählt, daß, wie in **Figur 1** dargestellt, ein Zwischenraum zwischen dem Strebenende und dem Säulenmantel sich ergibt, welchen die beiden Backen **7** und **9** im montierten Zustand überbrücken. Der Durchmesser der Löcher **34a** und **34b** entspricht dem mittleren Durchmesser des konischen Kopfansatzes **12** der Schraube **11**.

Die Säule **3** hat zwei koaxiale im Abstand **a** voneinander distanzierte Umfangsnuten **35** und **37**. Das Profil der Nuten **35** und **37** ist zueinander spiegelbildlich ausgebildet. Die einander benachbarten Seitenwände **39a** und **39b** der Nuten **35** und **37** bilden mit dem Mantel der Säule **3** einen spitzen Winkel, während jede der anderen Seitenwände **41a** und **41b** einen stumpfen Winkel bildet. Der jeweilige Nutenboden **43a** bzw. **43b** ist koaxial zum Säulenmantel.

Der Abstand **a** der beiden Nuten **35** und **37** ist derart gewählt, daß er dem Abstand der beiden benachbarten Seiten **45a** und **46a** der Ansätze **19a** und **21a** der Backen **7** und **9** im zusammengebauten Zustand, wie in **Figur 1** zu sehen, entspricht. Die Seitenwände **45a** und **46b** und die Frontflächen **49a** und **50a** der Ansätze **19a** und **21a** sind passend zu den Nuten **35** und **37** ausgebildet. Analog sind die Seitenwand **45c** und die Frontfläche **49b,** sowie die Seitenwand **46c** und die Frontfläche **50b** des Ansatzes **19b** bzw. **21b** ausgebildet. Der Abstand **b** der Ansätze **19b** und **21b** ist größer als der Abstand **a** der anderen beiden Ansätze **19a** und **21a**. Die den Seitenwänden **45a** und **45c** sowie **46a** und **46c** gegenüberliegenden Seitenwänden **45b** und **45d** sowie **46b** und **46d** sind annähernd parallel zu den Seitenwänden **41a** bzw. **41b** der Nuten **35** bzw. **37** ausgebildet, um eine möglichst große Kraftübertragung über die Ansätze **19a** und **21a** bzw. **19b** und **21b** über die Nuten **35** und **37** auf die Säule **3** zu ermöglichen.

Zur Verbindung der Säule **3** mit der Strebe **5** wird in die Aussparung **33b** der Backe **9** das Distanzstücke **13** eingedrückt. Die Backen **7** und **9** werden in das linke Ende der Strebe **5** derart eingeschoben, daß, wie in **Figur 1** dargestellt, die Backe **7** oben und die Backe **9** unten liegt. Die Schraube **11** wird von unten durch das Loch **34b** in der Strebe **5** durch die Durchgangsbohrung **29** in der Backe **9** geschoben und in die Gewindebohrung **27** der Backe **7** eingeschraubt, bis sie durch das Loch **34a** der Strebe **5b** kommt. Anschließende werden die in der Strebe **5** befindlichen Backen **7** und **9** mit ihren Ansätzen **19a** und **21a** in die Nuten **35** und **37** der Säule **3** eingehangen und die Schraube **11** angezogen. Durch das Anziehen der Schraube **11** wird die Backe **7** gegen die Backe **9** gezogen und hierdurch die Seiten **45a** und **46a** der Ansätze **19a** und **21a** gegen die Seitenwände **39a** und **39b** der Nuten **35** und **37** gezogen. Aufgrund des sich zwischen den beiden Backen **7** und **9** befindlichen Distanzstückes **13** werden die Backen **7** und **9** durch die Schraube **11** ohne Verzug gegen die Nutenseitenwände **39a** und **39b** gezogen. Indem die Schraube **11** in die Backe **7** eingeschraubt wird, wird die Backe **9** durch die Backe **7** aufgrund des durch das Loch **34b** gehaltenen Kopfansatzes **12** der Schraube **11** gegen die Wandung der Strebe **5** gezogen. Bei fest angezogener Schraube **11** sitzen die Backen **7** und **9** fest an der Säule **3** und können aufgrund der spitzen Winkel zwischen der Flächen **39a** bzw. **39b** und der Mantelfläche der Säule **3** und den in sie eingreifenden Flächen **45a** und **46a** auch nicht weggezogen werden. Das Verbindungselement **1** ist durch die an die Innenseite der Strebe **5** über den konischen Schraubenansatz **12** angepreßte Backe **9** kraft- und formschlüssig mit der Strebe **5** verbunden.

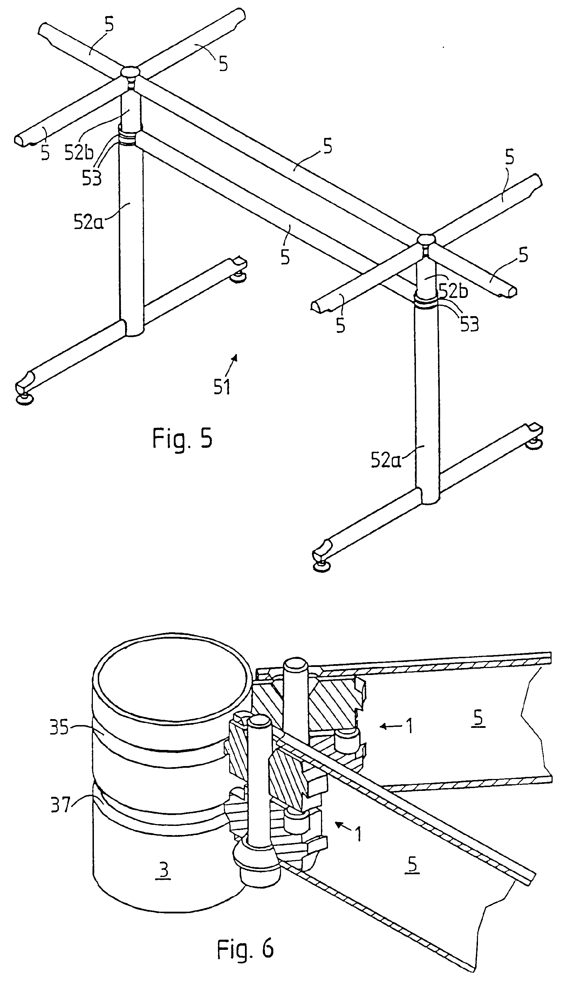

Gewisse Konstruktionen von Säulen mit Streben benötigen Säulen mit zwei unterschiedlich großen Durchmesser, wie z. B. in **Figur 5** bei einem Gestell **51** bestehend aus jeweils zwei ineinander gesteckten Säulen **52a** und **52b.** Bei der dickeren Säule **52a** werden dann im Unterschied zur dünneren Säule **52b** die beiden Nuten **53** im Abstand **b** angebracht. Bei der Montage werden die beiden Backen **7** und **9** derart in die Strebe **5** eingeschoben, daß die Ansätze **19b** und **21b** aus der Strebe **5** herausschauen. Das Distanzstück **13** wird hier in die Aussparung **33a** eingedrückt. Die restliche Montage erfolgt wie oben bereits geschildert. Die Seitenwände **45c** und **46c** der Ansätze **19b** und **21b** liegen dann an den zu den Seiten **39a** und **39b** analogen Seiten der Nuten auf. Da der Abstand der beiden Ansätze **19b** und **21b,** wie in **Figur 2** gezeigt, um den Abstand **d** von der Mitte **31** größer ist als der Abstand der Ansätze **19a** und **21a**, ist hierdurch der größere Durchmesser der Säulen **52a** bei gleichlangen Streben **5** in der Gesamtkonstruktion des Gestells **51** wieder ausgeglichen. Der Abstand 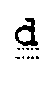 entspricht der Differenz der beiden Säulenradien. Um eine falsche Montage, d. h. Anklemmen der Ansätze **19b** und **21b** an der dünnen Säule **3** zu verunmöglichen, wurde der Abstand **b** der Ansätze **19b** und **21b** größer als der Abstand **a** der Ansätze **19a** und **21a** gewählt.

An einer Säule **3** lassen sich, wie in **Figur 6** dargestellt mehrere Streben **5** unter annähernd beliebigem Winkel befestigen. Der minimale verwendbare Winkel hängt von Durchmesserverhältnis der Strebe **5** zur Säule **3** ab, und beträgt bei gleich großem Durchmesser von Säule und Strebe etwa 54°. Um die Befestigung der beiden Streben **5** besser darstellen zu können sind in **Figur 6** beide Streben **5** im Längsschnitt entlang einer Ebene dargestellt, in welcher die Schraubenachse und die Strebenachse liegen.

Anstelle einer zylindrischen rohrförmigen Säule **3** kann auch eine elliptische Säule sowie eine massive Säule verwendet werden. Es kann auch eine Säule bestehend aus einem Vierkantrohr (Sechskantrohr, ... ) verwendet werden, in dessen Seitenflächen horizontale Nuten entsprechend der Nuten **35** und **37** eingefräst sind. Wird ein Vierkantrohr verwendet, so ist jedoch die Verbindungsmöglichkeit der Streben mit der Säule unter beliebigen Winkeln nicht mehr möglich; es kann an jeder Vierkantseite nur mehr eine Strebe senkrecht zur Vierkantseite angebracht werden.

Anstelle einer zylindrischen rohrförmigen Strebe kann auch eine beliebig gestaltete Strebe (elliptisch, vier-, sechskant, ... ) verwendet werden. Es müssen nur entsprechend der Strebeninnenfläche die Seite **23** bzw. **25** der Backen angepaßt werden.

Die Nuten **35** und **37**, und hiermit passend, auch die Ansätze **19a** und **19b** sowie **21a** und **21b** können unterschiedlich breit ausgebildet werden, um eine eindeutige Lage der Strebe **5** an der Säule **3** zu erreichen; die Lage des Schraubenkopfes ist hierdurch eindeutig festgelegt.

Die Verwendung des erfindungsgemäßen Verbindungselements gestattet es ineinanderschiebbare Säulen zu verwenden, da das Verbindungselement nicht in den Innenraum der Säule hineinragt. Ferner können in einem Gestell Säulen mit zwei verschiedenen Durchmessern verwendet werden, ohne die Länge der Streben anpassen zu müssen.

Die Nuten an der Außenseite der Säulen lassen sich in einem einfach durchzuführenden Drehvorgang preisgünstig herstellen. Aufwendige Stanz- oder Sägearbeiten, wie bei der Herstellung der bekannten Verbindungselemente, bei denen die Gefahr einer Säulenverkrümmung besteht, sind nicht notwendig. Ferner kann statt des teuren Profilmaterials preisgünstiges, einfach zu bearbeitendes Rundmaterial verwendet werden.

Als weiterer Vorteil ergibt sich bei dem erfindungsgemäßen Verbindungselement die Möglichkeit Streben unter annähernd beliebigem Winkel anzubringen, wodurch sich zusätzliche Gestaltungsmöglichkeiten bei der Herstellung von Gestellen ergeben.

## Patentansprüche

1. Verbindungsanordnung eines Endes einer rohrförmigen Strebe **(5)** an einer Säule **(3)** mit zwei in zwei Nuten greifende, im Querschnitt zwei zueinander spiegelbildlich, krallen- oder hakenartig vorspringend ausgebildete Ansätze **(19a, 21a; 19b, 21b)** aufweisende Backen **(7, 9)** und einer Schraube **(11)**, mit der die Backen **(7,** **9)** am Strebenende und unter Eingreifen ihrer Ansätze **(19a, 21a; 19b, 21b)** in die Nuten **(35, 37)** an der Säule **(3)** gehalten sind, **dadurch** **gekennzeichnet**, daß die Nuten **(35, 37)** in die Säulenwandung mit radial nach außen offener Nutöffnung und mit einem mit dem Nutboden einen spitzen Winkel bildenden Nutrandbereich **(39a, 39b)** eingearbeitet sind, die Strebe **(5)** ein offenes Rohrende hat, in welchem die Backen **(7, 9)** einander diametral gegenüberliegend in Strebenlängsrichtung mit der Schraube **(11)** gehalten sind, und die Backen **(7, 9)** eine dem Säulenwandungsprofil am Befestigungsort angepaßte, die Ansätze **(19a, 21a; 19b, 21b)** enthaltende Stirnfläche **(15a, 17a; 15b, 17b)** haben, wobei die krallen- oder hakenartigen Ansätze **(19a, 21a; 19b, 21b)** derart ausgebildet sind, daß ein formschlüssiges Anliegen der Ansätze **(19a,** **21a**; **19b**, **21b)** an den Nutrandbereichen **(35, 37)** und der Stirnfläche am Säulenwandungsprofil erfolgt, um eine möglichst große Kraftübertragung über die Ansätze **(19a, 21a**; **19b, 21b)** und Nuten **(35, 37)** auf die Säule **(3)** zu gewährleisten.

2. Verbindungselement **(1)** der Verbindungsanordnung nach Anspruch 1 mit zwei im Querschnitt zueinander spiegelbildlich, krallen- oder hakenartig vorspringend ausgebildete Ansätze **(19a, 21a; 19b**, **21b)** aufweisende Backen **(7, 9)** und einer Schraube **(11)** mit der die Backen **(7**, **9)** am Strebenende und unter Eingreifen ihrer Ansätze **(19a, 21a; 19b, 21b)** in den Nuten **(35, 37)** an der Säule **(3)** halterbar sind, **dadurch gekennzeichnet,** daß jede Backe **(7, 9)** einen in das offene Strebenende einsetzbaren Backenteil und eine dem Säulenwandungsprofil am Befestigungsort angepaßte, die Ansätze **(19a, 21a; 19b, 21b)** enthaltende Stirnfläche **(15a, 17a; 15b, 17b)** hat, wobei die krallen- oder hakenartigen Ansätze **(19a, 21a; 19b, 21b)** derart ausgebildet sind, daß ein formschlüssiges Anliegen der Ansätze **(19a, 21a; 19b, 21b)** an den Nutrandbereichen **(35, 37)** und der Stirnfläche am Säulenwandungsprofil erfolgt, um eine möglichst große Kraftübertragung über die Ansätze **(19a, 21a; 19b, 21b)** und Nuten **(35, 37)** auf die Säule **(3)** zu gewährleisten.

3. Verbindungselement **(1)** nach Anspruch 2 mit in ihrer Gebrauchslage miteinander fluchtenden Backendurchgangsbohrungen **(27, 29)**, **dadurch gekennzeichnet,** daß die Schraube **(11)** einen an der Außenseite der Strebenwandung abzustützenden Kopf **(12)** hat und in der Bohrung **(29)** der ihrem Kopf **(12)** benachbarten Backe **(9)** verschieb- und drehbar sowie in der Bohrung **(27)** der anderen Backe **(7)** einschraubbar ist.

4. Verbindungselement **(1)** nach Anspruch 2 oder 3, **gekenn****zeichnet durch** ein zwischen beiden Backen **(7, 9)** annähernd in einer durch die Schraubenachse verlaufenden Ebene am in bezug auf die Schraube **(11)** zur Säule **(3)** abgewandten Teil der Backen **(7, 9)** einsetzbares Distanzstück **(13)**.

5. Verbindungselement **(1)** nach einem der Ansprüche 2 bis 4, **dadurch gekennzeichnet**, daß am einen Ende jeder Backe **(7, 9)** der Ansatz **(19a, 21a)** und an ihrem anderen dem einen Ende abgewandten Ende je ein weiterer zum ersten Ansatz analog ausgebildeter Ansatz **(19b, 21b)** vorhanden ist und der Abstand der beiden Ansätze **(19a,** **19b, 21a, 21b)** jeder Backe **(7, 9)** zur Achse der Schraube **(11)** unterschiedlich ist, um je nach Säulenquerschnitt das eine oder das andere Ansatzpaar **(19a/21a,** **19b/21b)** in die Nuten **(35, 37)** der Säule **(3)** einzubringen.

6. Verbindungselement **(1)** nach Anspruch 5, **dadurch** **ge****kennzeichnet,** daß jeweils am anderen Ende der Backen **(7, 9)** analog zum einen Ende weitere Stirnflächen **(15b, 17b)** vorhanden sind und beide Stirnflächen **(15a, 17a; 15b, 17b)** jeder Backe **(7, 9)** verschiedenen Säulenquerschnitten angepaßt gekrümmt sind.

7. Verbindungselement nach einem der Ansprüche 2 bis 6, **dadurch gekennzeichnet,** daß die in Gebrauchslage einander abgewandten Flächen **(23, 25)** der Backen **(7, 9)** derart gekrümmt sind, daß sie beim Einbau in die Strebe **(5)** deren benachbarten Innenflächen angepaßt sind.

8. Verbindungselement nach einem der Ansprüche 2 bis 7, **dadurch gekennzeichnet,** daß jeder der Ansätze **(19a,** **21a; 19b, 21b)** eine Auflagefläche **(45a, 46a; 45c, 46c)** hat, welche mit der Stirnfläche **(15a, 17a; 15b, 17b)** der Backe **(7, 9)** einen spitzen Winkel bildet.

9. Säule **(3)** der Verbindungsanordnung nach Anspruch 1, **gekennzeichnet durch** zwei in einem Abstand voneinander, die Säulenwandung mit radial nach außen offener Nutöffnung und mit einem mit dem Nutboden einen spitzen Winkel bildenden Nutrandbereich **(39a, 39b)** eingearbeitete, zueinander spiegelbildliche Nuten **(35, 37)**.

10. Gestell **(51)** mit wenigstens einer Säule **(3)** nach Anspruch 9 und mindestens einer rohrförmigen Strebe **(5)**, welche durch ein Verbindungselement **(1)** nach einem der Ansprüche 2 bis 8 miteinander verbunden sind.

## Claims

1. Arrangement for connecting one end of a tubular strut (5) to a column (3) with two cheek pieces (7, 9) which engage in two grooves and comprise two extensions (19a, 21a; 19b, 21b) which, in cross-section, are symmetrical to one another and which are formed such that they project in a claw-like or hook-like manner, and with a screw (11), with which the cheek pieces (7, 9) are retained on the strut end with engagement of their extensions (19a, 21a; 19b, 21b), in the groove (37, 35) on the column (3), characterised in that the grooves (35, 37) are incorporated in the column wall with a groove opening which extends radially outwards, and with a groove edge area (39a, 39b) which forms an acute angle with the groove base; the strut (5) has an open tube end, in which the cheek pieces (7, 9) are retained diametrically opposite one another in the longitudinal direction of the strut by means of the screw (11), and the cheek pieces (7, 9) comprise an end face (15a, 17a; 15b, 17b) which is adapted to the profile of the column wall at the securing point and comprises the extensions (19a, 21a; 19b, 21b), the claw-like or hook-like extensions (19a, 21a; 21b, 21b) being formed in such a manner that a form-locking abutment of the extensions (19a, 21a; 19b, 21b) on the groove edge areas (35, 37) and of the end face on the column wall profile results, in order to ensure a force transmission which is as large as possible via the extensions (19a, 21a; 19b, 21b) and grooves (35, 37) onto the column (3).

2. Connection element (1) of the connection arrangement according to Claim 1, with two cheek pieces (7, 9) comprising two extensions (19a, 21a; 19b, 21b) which project symmetrically to one another in a claw-like or hook-like manner, and with a screw (11) with which the cheek pieces (7, 9) can be retained on the column (3) at the strut end, and with engagement of their extensions (19a, 21a; 19b, 21b) in the grooves (35, 37), characterised in that each cheek piece (7, 9) comprises a cheek piece part which can be inserted into the open strut end and an end face (15a, 17a; 15b, 17b) which is adapted to the column wall profile at the securing point and comprises the extensions (19a, 21a; 19b, 21b), the claw-like or hook-like extensions (19a, 21a; 19b, 21b) being formed in such a manner that a form-locking abutment of the extensions (19a, 21a; 19b, 21b), on the groove edge areas (35, 37) and of the end face on the column wall profile results, in order to ensure a force transmission which is as large as possible by means of the extensions (19a, 21a; 19b, 21b) and grooves (35, 37) onto the column (3).

3. Connection element (1) according to Claim 2 with bores (27, 29) which penetrate the cheek pieces and are flush with one another in the operative position, characterised in that the screw (11) comprises a head (12) which is to be supported on the exterior of the strut wall and can be screwed displaceably and rotatably into the bore (29) of the cheek piece (9) adjacent its head (12) and in the bore (27) of the other cheek piece (7).

4. Connection element (1) according to Claim 2 or Claim 3, characterised by a spacer member (13) which can be inserted between both cheek pieces (7, 9) approximately in a plane extending through the screw axis on the part of the cheek pieces (7, 9) which is turned away from the column (3) relative to the screw (11).

5. Connection element (1) according to any one of Claims 2 to 4, characterised in that there is provided, at one end of each cheek piece (7, 9), the extension (19a, 21a), and at the other end thereof, which faces away from the one end, in each case, a further extension (19b, 21b) of similar shape to the first extension, and the distance from the two extensions (19a, 19b, 21a, 21b) of each cheek piece (7, 9) to the axis of the screw (11) is different, such that the one or the other pair of extensions (91a/21a, 19b/21b) is introduced into the grooves (35, 37) of the column (3) depending on the cross-section of the column.

6. Connection element (1) according to Claim 5, characterised in that further end faces are provided at the other ends of the cheek pieces (7, 9) in each case, and both end faces (15a, 17a; 15b, 17b) of each cheek piece (7, 9) are curved in a manner so as to be adapted to different column cross-sections.

7. Connection element according to any one of Claims 2 to 6, characterised in that the surfaces (23, 25) of the cheek pieces (7, 9) which are turned away from one another in the operating position are curved in such a manner that they are adapted to their adjacent inner surfaces when they are installed in the strut (5).

8. Connection element according to any one of Claims 2 to 7, characterised in that each of the extensions (19a, 21a; 19b, 21b) has a supporting surface (45a, 46a; 45c, 46c), which forms an acute angle with the end face (15a, 17a; 15b, 17b), of the cheek piece (7, 9).

9. Column (3) with a connection arrangement according to Claim 1, characterised by two grooves (35, 37) which are symmetrical to one another, which are incorporated into the column wall at a distance from one another with groove openings which are open radially outwards and with a groove edge area (39a, 39b) which forms an acute angle with the base of the groove floor.

10. Framework (51) with at least one column (3) according to Claim 9, and at least one tubular strut (5), which are connected to one another by means of a connecting element (1) according to any one of the Claims 2 to 8.

## Revendications

1. Dispositif de liaison de l'extrémité d'un tirant tubulaire (5) sur une colonne, au moyen de deux mâchoires (7, 9), s'engageant dans deux gorges et présentant deux appendices (19a, 21a; 19b, 21d) en forme de griffes ou de crochets, à section transversale mutuellement symétriques, et d'une vis (11), à l'aide de laquelle les mâchoires (7, 9) sont maintenues à l'extrémité du tirant, en étant introduites par leurs appendices (19a, 21a, 19b, 21d) dans des gorges (35, 37) ménagées sur la colonne (3), caractérisé en ce que les gorges (35, 37) sont formées par usinage dans la paroi de la colonne, avec leur ouverture orientée radialement vers l'extérieur et avec une zone de bordure (39a, 39b) formant un angle aigu avec leur fond, le tirant (5) ayant une extrémité tubulaire ouverte dans laquelle les mâchoires (7, 9) sont maintenues à l'aide de la vis (11) et orientées dans des directions longitudinales diamétralement opposées, les mâchoires (7, 9) comportant une face frontale (15a, 17a, 15b, 17b) adaptée au profil de la paroi de la colonne à l'endroit de la fixation et contenant les appendices (19a, 21a, 19b, 21d), ceux-ci étant réalisés de façon à assurer un appui du fait de l'ajustement de leurs formes sur les zones de bordure (35, 37) et de la face frontale sur le profil de la paroi de la colonne, en réalisant une transmission mécanique aussi grande que possible, par l'intermédiaire de ces appendices (19a, 21a, 19b, 21d) et de ces gorges (35, 37), à la colonne (2).

2. Elément de liaison (1) du dispositif selon la revendication 1, comprenant deux mâchoires (7, 9), présentant des appendices (19a, 21a, 19b, 21d) en forme de griffes ou de crochets, à section transversale mutuellement symétriques, et une vis (11), à l'aide de laquelle les mâchoires (7, 9) sont maintenues à l'extrémité du tirant, en étant introduites par leurs appendices (19a, 21a, 19b, 21d) dans des gorges (35, 37) ménagées sur la colonne (3), caractérisé en ce que chaque mâchoire (7, 9) comporte une face frontale (15a, 17a, 15b, 17b) adaptée au profil de la paroi de la colonne à l'endroit de la fixation, contenant les appendices (19a, 21a, 19b, 21d), ceux-ci étant réalisés de façon à assurer un appui du fait de l'ajustement de leurs formes sur les zones de bordure (35, 37) et de la face frontale sur le profil de la paroi de la colonne, en réalisant une transmission mécanique aussi grande que possible par l'intermédiaire de ces appendices (19a, 21a 19b, 21d) et de ces gorges (35, 37), à la colonne (2).

3. Elément de liaison (1) selon la revendication 2, comportant des perçages traversant la mâchoire (27, 29), alignés l'un par rapport à l'autre en position d'utilisation, caractérisé en ce que la vis (11) comprend une tête (12) prenant appui sur la face extérieure de la paroi du tirant et peut être déplacée et tournée dans le perçage (29) de la mâchoire (9) voisine de sa tête (12) et vissée dans le perçage (27) de l'autre mâchoire (7).

4. Elément de liaison (1) selon la revendication 2 ou 3, caractérisé par une pièce d'écartement (13), susceptible d'être mise en oeuvre (13) entre les deux mâchoires (7, 9), à peu près dans un plan passant par l'axe de la vis, sur la partie des mâchoires (7, 9) opposée à la colonne (3) par rapport à la vis (11).

5. Elément de liaison (1) selon l'une des revendications 2 à 4, caractérisé en ce que les appendices (19a, 21a) sont prévus à une extrémité de chaque mâchoire (7, 9), et, à son extrémité opposée, les autres appendices analogues (19b, 21b), la distance entre les deux appendices (19a, 19b, 21a, 21b) de chaque mâchoire (7, 9) par rapport à l'axe de la vis (11) étant différente, afin de loger, selon la section transversale de colonne, l'un ou l'autre couple de ces appendices (19a/21a, 19b/21b), dans les rainures (35, 37) de cette colonne (3).

6. Elément de liaison (1) selon la revendication 5, caractérisé en ce que sont réalisées d'autres faces frontales (15b, 17b) à l'autre extrémité des mâchoires (7, 9), analogues à celles de la première extrémité, les deux faces frontales (15a, 17a, 15b, 17b) de chaque mâchoire (7, 9) étant incurvées de façon adaptée aux différentes sections transversales.

7. Elément de liaison selon l'une des revendications 2 à 6, caractérisé en ce que les faces frontales (23, 25), mutuellement opposées dans la position d'utilisation des mâchoires (7, 9) sont incurvées de manière que, lors du montage dans les tirants (5), leurs faces intérieures voisines soient adaptées.

8. Elément de liaison selon l'une des revendications 2 à 7, caractérisé en ce que chacun des appendices (19a, 21a, 19b, 21b) présente une face d'appui (45a, 46a, 45c, 46c), formant un angle aigu avec la face frontale (15a, 17a, 15b, 17b) de la mâchoire (7, 9).

9. Colonne (3) du dispositif de liaison selon la revendication 1, caractérisée par deux gorges (35, 37), symétriques mutuellement, usinées à distance l'une de l'autre dans la paroi de colonne, avec une ouverture de gorge tournée radialement vers l'extérieur et une zone de bordure (39a, 39b) formant un angle aigu avec le fond de la gorge.

10. Bâti (51), comportant au moins une colonne (3) selon la revendication 9 et au moins un tirant tubulaire (5), reliés ensemble au moyen d'un élément de liaison (1) selon l'une des revendications 2 à 8.
